# EUROPÄISCHE PATENTSCHRIFT

(11) **EP 2 483 138 B1**
(45) Veröffentlichungstag und Bekanntmachung des Hinweises auf die Patenterteilung: **28.08.2013**
(21) Anmeldenummer: 10762601.2
(22) Anmeldetag: 25.09.2010
(51) Int. Cl.: B60V 3/02, B62D 55/265

(54) **KLETTERROBOTER FÜR DAS BEFAHREN VON HAFTOBERFLÄCHEN**
CLIMBING ROBOT FOR TRAVELLING OVER ADHESIVE SURFACES
ROBOT GRIMPANT DESTINÉ À SE DÉPLACER SUR DES SURFACES À ADHÉRENCE

(30) Priorität: 01.10.2009 DE 102009047992
(43) Veröffentlichungstag der Anmeldung: 08.08.2012
(73) Patentinhaber: Niederberger Patent AG, 6370 Oberdorf (CH)
(72) Erfinder: NIEDERBERGER, Anton, CH-6370 Oberdorf (CH)
(74) Vertreter: Weissfloh, Ingo
(86) Internationale Anmeldenummer: PCT/EP2010/005875
(87) Internationale Veröffentlichungsnummer: WO 2011/038870

(56) Entgegenhaltungen:
- EP-A1- 0 324 297
- EP-B1- 1 507 696
- GB-A- 2 299 063
- US-A- 5 890 553

## Beschreibung

### Anwendungsgebiet der Erfindung

Die Erfindung betrifft einen Kletterroboter für das Befahren von Haftoberflächen nahezu beliebiger Geometrie. Unter Haftoberflächen sollen solche verstanden werden, auf denen Saug- und/oder Magnetelemente haften können. Die Geometrie der Haftoberflächen kann sowohl eben als auch gekrümmt sein, sich flach, geneigt oder vertikal erstrecken und kleinere Hindernisse aufweisen.

### Stand der Technik

Für das Fortbewegen an senkrechten oder geneigten Haftoberflächen ist es bekannt, selbstkletternde Vorrichtungen einzusetzen, die ihre Haftkraft über Magnetismus oder über Vakuum aufbauen, wobei der Begriff "Vakuum" streng genommen für Unterdruck steht. Hinsichtlich der Fortbewegungsart unterscheidet man zwischen Schreitwerken und Fahrwerken. Beide sind insbesondere für ebene Haftoberflächen konzipiert.

Schreitwerke erreichen derzeit nur Arbeitsgeschwindigkeiten bis zu 3m/min. Die Fortbewegung erfolgt periodisch mit Haltepausen. Um Arbeitsgeschwindigkeiten von 3m/min zu erreichen, muss die Hälfte der Vakuumsauger gelöst, angehoben und vorausgeschoben werden. Danach erfolgt das Absenken und Ansaugen dieser Sauger. Anschließend müssen die restlichen Sauger mit gleicher Vorgehensweise nachgeführt werden. Somit schwankt die verfügbare Haltekraft ständig zwischen 50% und 100%. Werden die Sauger paarweise oder einzeln vorangeschoben bzw. nachgeführt, sinkt die Fortbewegungsgeschwindigkeit weit unter 3m/min. Nachteilig ist ebenfalls der hohe Steuerungs- und Überwachungsaufwand der einzelnen Bewegungen. Ein Vorteil solcher Vorrichtungen ist die einfach zu realisierende Lenkbarkeit durch seitliches Versetzen quer zur Fortbewegungsrichtung und die der Vorrichtung von Anfang an gegebene Fähigkeit, kleinere Hindernisse, wie Leisten, zu überwinden. Schreitende Vorrichtungen sind beispielsweise beschrieben in DE 24 58 491 A1, DE 198 35 038 C1, DE 199 07 437 A1, EP 0 401 120 A1, US 4 674 949 A, US 5 551 525 A und US 6 105 695 A.

Fahrwerke erreichen höhere Arbeitsgeschwindigkeiten bis zu 10m/min. Die Fortbewegung ist gleichförmig ohne Haltepausen und die Arbeitstakte: Haftelemente lösen, anheben, nachführen, absenken und anhaften können für die betreffenden Haftelemente gleichzeitig erfolgen. Die ständig verfügbare Haltekraft schwankt somit zwischen 80% und 100%. Vorteilhaft ist auch der geringere Steuerungsaufwand, da die Arbeitstakte zwangsgesteuert werden können. Nachteilig an bekannten Fahrwerken ist die ungenügende Lenkbarkeit, wie seitliches Versetzen quer zur Fortbewegungsrichtung und die im Grundmechanismus nicht vorhandene Fähigkeit, an senkrechten Wänden kleine Profile oder ähnliche Hindernisse zu überwinden. Beispiele für Kettenfahrwerke mit Saugelementen sind in DE 35 40 432 A1, DE 197 27 421 C2, DE 101 40 990 A1, DE 296 22 167 U1, EP 0 505 956 A1, EP 584 520 B1, EP 1 792 673 A2, US 5 487 440 A und US 6 090 221 A und solche mit Magnetelementen in EP 0 248 659 A2, EP 0 716 006 A2, EP 0 812 758 B1, EP 1 650 116 A1 und WO 2007/025553 A1.

Bei den Fahrwerken ist die Kettenfahrtechnik die derzeit praktikabelste Lösung. Jedoch müssen die umlaufenden Endloszugmittel, wie Ketten, Bänder, Seile oder Riemen, welche die Fortbewegung realisieren sollen, noch mit Haftelementen, also Saugern oder Magneten, bestückt sein.

Das Prinzip beruht darauf, dass jedes an einem Endloszugmittel befestigte Haftelement eine Endlosschleife durchläuft. Die der Fahrfläche zugewandten Haftelemente sind beaufschlagt und halten das Fahrwerk an der Haftoberfläche. Setzt man die Endloszugmittel in Bewegung, müssen die jeweils hinteren Haftelemente, "AUS" geschaltet werden, damit sie sich von der Haftoberfläche lösen und die Endloszugmittel diese Haftelemente um 180° nach oben schwenken können. Die umgeschwenkten Haftelemente zeigen somit in die von der Haftoberfläche abgewandte Richtung. In dieser Lage werden die Haftelemente in Fahrtrichtung transportiert und wieder um 180° geschwenkt, womit sie der Haftoberfläche wieder zugewandt werden. Nun werden die Haftelemente "EIN" geschaltet und können das Fahrwerk auf der Haftoberfläche fixieren. Nachdem das Fahrwerk über die "EIN" geschalteten Haftelemente hinweg gefahren ist, werden diese erneut "AUS" geschaltet und geschwenkt. Dieser Vorgang wiederholt sich während des Fahrens für jedes einzelnes Haftelement fort-während.

Ein Nachteil der Kettenfahrtechnik besteht darin, dass sie kaum gekrümmte Flächen und Profile überwinden können. Außerdem lassen sich nur sehr kleine Trimmlenkbewegungen ausführen. Auch haben sie konstruktionsbedingt eine große Bauhöhe, da die Haftelemente über Kopf zurücklaufen.

Aus der EP 0 710 188 B1 ist ein Roboter nach der Kettenfahrtechnik mit Saugelementen bekannt, welche über Kopf zurücklaufen, der für ein Befahren einer Flugzeugaußenhaut konzipiert ist, um Inspektions-, Reinigungs- oder Polierarbeiten vorzunehmen. Der Roboter baut also ebenfalls sehr hoch, was seine Kippfestigkeit an schrägen oder vertikalen Flächen beeinträchtigt.

Aus der DE 102 12 964 A1 ist ein Kletterroboter nach der Kettenfahrtechnik bekannt, dessen Saugfüße nach dem Paternosterprinzip so gelagert und geführt sind, dass ihre Saugflächen annähernd parallel zur Oberfläche ausgerichtet sind. Einzelheiten sind nicht offenbart.

Letztlich ist in der zur Bildung des Oberbegriffes des Hauptanspruches herangezogenen EP 1 507 696 B1 ein selbstkletterndes Fahrwerk für Fassaden, insbesondere Glasfassaden, beschrieben, welches ebenfalls nach der Kettenfahrtechnik arbeitet, dessen mit Haftelementen bestückte Endloszugmittel jedoch in der Fahrebene umlaufen, wodurch die Haftseiten der Haftelemente stets zur Haftoberfläche zeigen. Das Fahrwerk wird dadurch sehr flach. Es kann schräge, vertikale und überhängende Wände befahren, kleinere Lasten heben und Fassadenprofile geringer Höhe überklettern. Es besitzt ein Endloszugmittelpaar. Diejenigen Haftelemente, die das Fahrwerk stützen und bewegen, sind "EIN" geschaltet und haften auf der Haftoberfläche, alle anderen sind gelüftet und "AUS" geschaltet. Die Kettenpaare werden in geraden, zueinander parallelen Längsabschnitten geführt und laufen bogenförmig zurück. Die Haftkraft beim Arbeiten eines aufgesetzten Roboters ist folglich von der Länge des Fahrwerks abhängig. Entsprechend lang muss das Fahrwerk sein. Die Lenkmanöver sind aufwändiger, da für einen 90°-Einschlag eine Drehung des Fahrwerks vorgenommen werden muss, bevor die Fahrt fortgesetzt werden kann. Das Fahrwerk ist ferner nicht fähig, gekrümmte Oberflächen zu befahren, weil der steife, lange Rahmen dem Krümmungsprofil einer Oberfläche nicht folgen kann.

### Wesen der Erfindung

Aufgabe der Erfindung ist es, einen preiswerten, betriebssicheren, extrem manövrierfähigen Kletterroboter geringer Masse und Abmessungen zu schaffen, welcher sehr sicher an einer schrägen, senkrechten, überhängenden oder auch gekrümmten Haftoberfläche ferngesteuert fahren kann, auf der Stelle drehen und ohne Drehbewegung im 90°-Winkel abbiegen kann, kleine Hindernisse übersteigen kann, nicht an Seilen oder ähnlichen Sicherheits- und Hilfsmitteln hängen muss und vorzugsweise für Inspektions-, Oberflächenbehandlungs-und Instandhaltungsarbeiten einsetzbar ist. Der Kletterroboter soll sich durch einen minimierten Steueraufwand und Energieverbrauch für den Fahrbetrieb auszeichnen und beispielsweise neben ebenen polierten Steinflächen oder Metallflächen auch Flugzeugaußenhäute, Schiffsrümpfe und ähnlich komplizierte Oberflächen befahren und dabei kleine Hindernisse überwinden können.

Die Aufgabe wird erfindungsgemäß durch die im Anspruch 1 angegebenen Merkmale gelöst. Vorteilhafte Ausgestaltungen und Weiterentwicklungen zeigen die abhängigen Ansprüche auf.

Mit der Erfindung ist ein kleiner, besonders flacher, relativ schneller Kletterroboter geschaffen worden, welcher ferngesteuert an schrägen, senkrechten, überhängenden und/ oder gekrümmten Haftoberflächen fahren kann, kleine Hindernisse überwindet, auf der Stelle wendet, ohne Wendemanöver einen 90° Richtungswechsel vollzieht, einen vergleichsweise geringen Steuer- und Energieaufwand erfordert und nicht an Seilen oder ähnlichen Hilfsmitteln hängen muss. Er eignet sich insbesondere für Inspektions-, Reinigungs-, Wartungs-und Reparaturarbeiten an Flugzeugaußenhäuten, Schiffsrümpfen oder sonstigen gekrümmten Gebäudeflächen, die nur erschwert zu begehen sind oder tunlichst überhaupt nicht betreten werden sollten.

### Ausführungsbeispiele für die Erfindung

Die Erfindung soll anhand von Ausführungsbeispielen näher erläutert werden.

In den zugehörigen Zeichnungen zeigen:
- Fig. 1: eine erste Variante eines Kletterroboters für eine Oberflächenbehandlung in perspektivischer Ansicht,
- Fig. 2: eine Ansicht dieses Kletterroboters von der Seite,
- Fig. 3: eine Ansicht dieses Kletterroboters von unten,
- Fig. 4: eine perspektivische Ansicht von unten,
- Fig. 5: den Kletterroboter mit abgenommener Abdeckhaube,
- Fig. 6: eine Variante eines Kletterroboters mit einem Inspektionsgerät in perspektivischer Ansicht,
- Fig. 7: eine Ansicht dieses Kletterroboters von unten,
- Fig. 8: eine Ansicht von unten mit abgenommener Abdeckung,
- Fig. 9: einen einzelnen Haftfuß mit Sauger und
- Fig. 10: einen einzelnen Haftfuß mit Schaltmagnet.

Funktionell gleichartige Bauteile sind in allen Figuren mit denselben Bezugszeichen versehen.

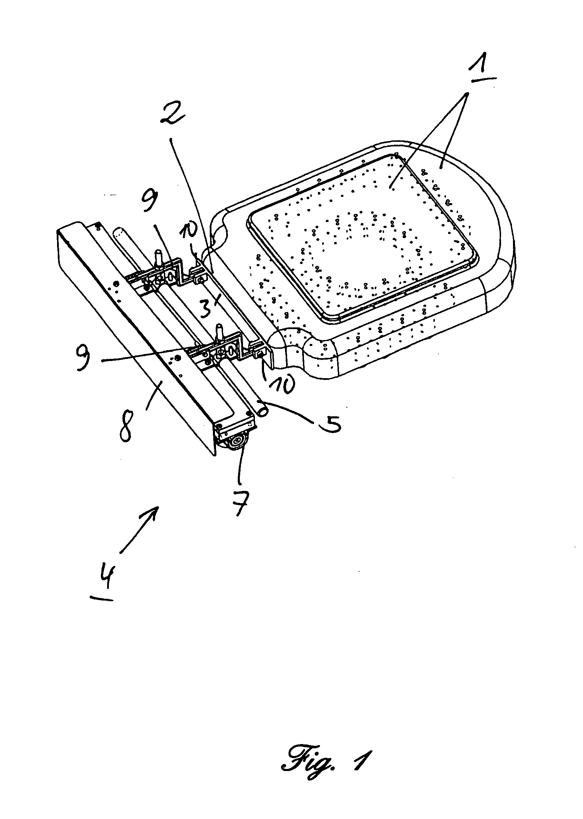

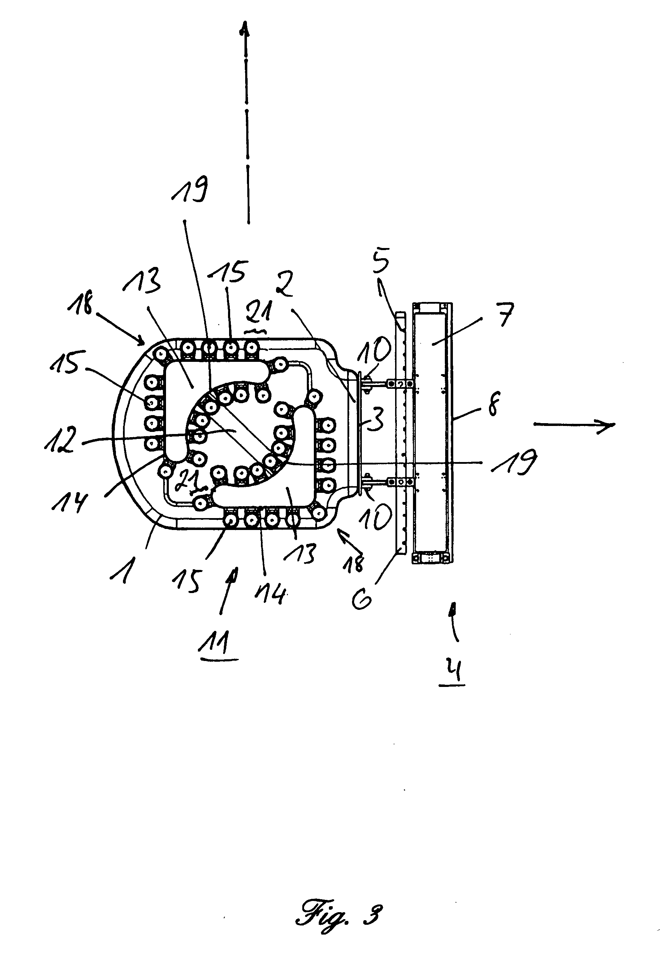

Von einem Kletterroboter ist gemäß Fig. 1 seine Abdeckhaube 1 zu sehen, an deren Stirnseite 2 ein Adapter 3 für ein Reinigungsgerät 4 montiert ist. Der Kletterroboter fährt mit dem Reinigungsgerät 4 über eine nicht näher dargestellte Haftoberfläche, beispielsweise eine Flugzeugaußenhaut. Das Reinigungsgerät 4 hat im Beispiel ein Sprührohr 5, in das längs Düsen 6 (Fig. 3) eingearbeitet sind, eine pneumatisch angetriebene Putzrolle 7 sowie einen Spritzschutz 8. Diese Hauptteile können zueinander mittels einer Verstelleinrichtung 9 verstellt werden. Ferner lässt sich das Reinigungsgerät 4 mittels zweier am Adapter 3 vorhandenen Gelenkbolzen 10 höhenmäßig vertellen. Die Abdeckhaube 1 kann einen nicht dargestellten Tank mit Reinigungsflüssigkeit tragen oder es wird ein Versorgungsschlauch an das Sprührohr 5 angeschlossen, durch den Reinigungsflüssigkeit vom Boden aus gepumpt wird.

An den Adapter 3 sind unterschiedliche Reinigungssysteme anschließbar, beispielsweise auch ein Trockeneis-Reinigungsgerät, wie es aus DE 102 33 304 B4 bekannt ist, ein Ultraschall- oder ein Laser-Reinigungsgerät.

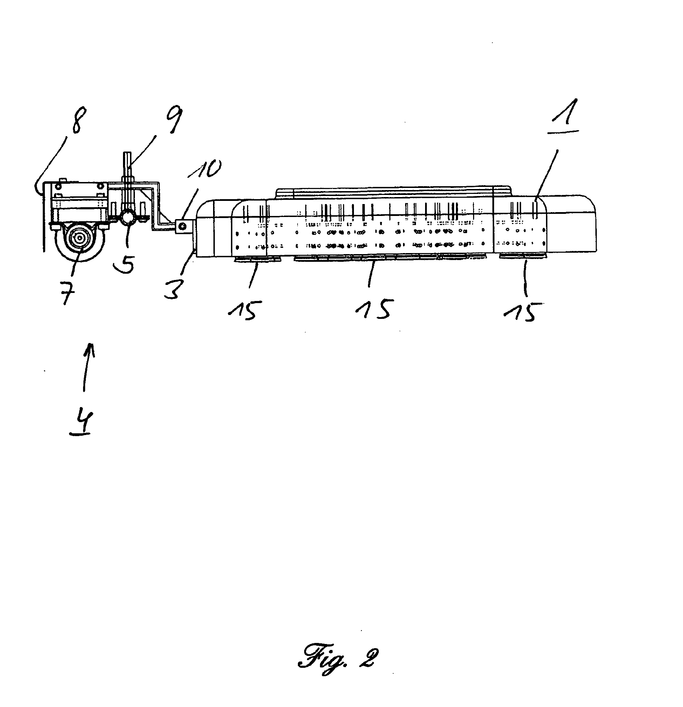

Fig. 2 zeigt den Kletterroboter mit angebautem Reinigungsgerät 4 von der Seite. Zu sehen sind die Abdeckhaube 1, aus der unten Haftelemente 15, konkret Sauger, herausschauen. Stirnseitig ist der Adapter 3 mit seinen Gelenkbolzen 10 zu sehen. Von dem Reinigungsgerät 4 sind das Sprührohr 5, die Putzrolle 7, der Spritzschutz 8 und die Verstelleinrichtung 9 sichtbar. Das Reinigungsgerät 4 kann hochgeschwenkt und abgesenkt werden. Deutlich zu erkennen ist, dass der Reinigungsroboter sehr klein und flach baut.

Fig. 3 zeigt den Kletterroboter gemäß Fig. 1 von unten. Zu sehen ist die Unterseite der Abdeckhaube 1 und das an die Stirnseite 2 der Abdeckhaube 1 mittels des Adapters 3 befestigte Reinigungsgerät 4. Man erkennt ferner die Gelenkbolzen 10 des Adapters 3 zur Höhenverstellung des Reinigungsgeräts 4, das Sprührohr 5 mit seinen Düsen 6, die Putzwalze 7 und den Spritzschutz 8.

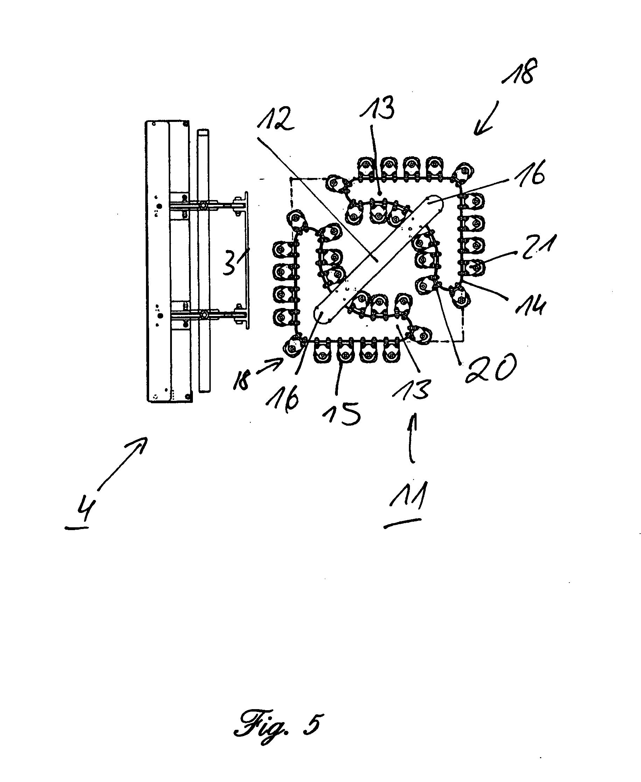

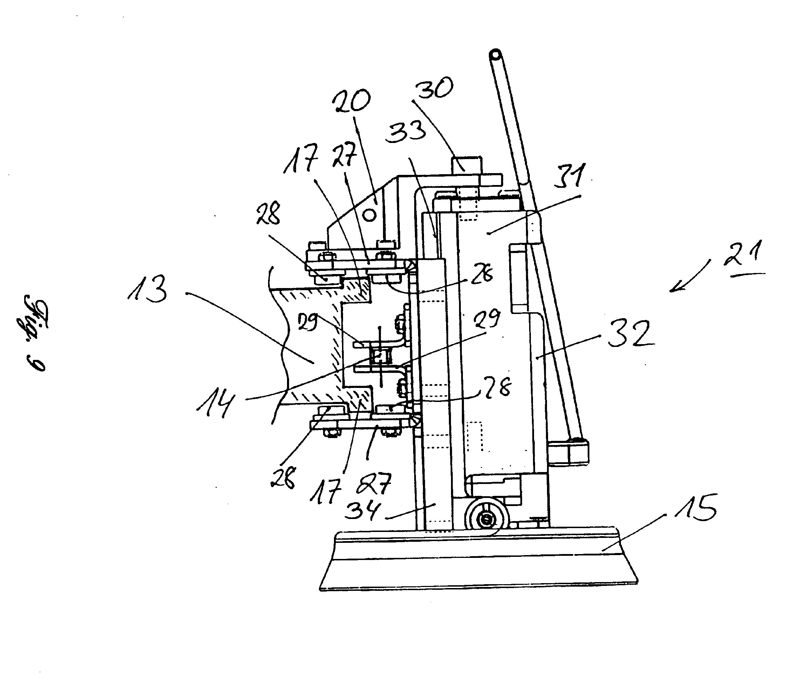

Die Abdeckhaube 1 umschließt oben und seitlich den Kletterroboter. Das Herz des Kletterroboters ist sein quadratisches Fahrwerk 11. Es weist im Wesentlichen einen länglichen, mittelpunktsymmetrischen Querträger 12 und zwei in gegenüberliegenden Eckbereichen 18 des Quadrats angeordnete Fußplatten 13 auf. Um die Ränder der beiden Fußplatten 13 läuft eine Vielzahl von zu Fig. 9 näher beschriebenen Haftfüßen 21 um, die von Endloszugmitteln 14 gezogen werden. Auf der Unterseite der Haftfüße 21 sitzen die eigentlichen Haftelemente 15. Der Querträger 12 trägt einerseits die Abdeckhaube 1 und andererseits die beiden Fußplatten 13, welche im Beispiel kardanisch in nicht näher dargestellter Weise an den Enden 16 (Fig. 5) des Querträgers 12 so aufgehängt sind, dass sie zwar kippbeweglich, aber drehfest bezüglich der Fußplatte 13 sind. Hierdurch können sie sich unebenen Fahrflächen anpassen.

Jedes Endloszugmittel 14 wird von einem nicht näher dargestellten Motor angetrieben. Beispielsweise wird eine Gliederkette über ein Kettenrad oder ein Zahnriemen über ein Zahnrad eines von der Welle eines elektrischen oder pneumatischen Getriebemotors angetrieben. Die Motoren sitzen zwischen den Enden des Querträgers 12 und den Fußplatten 13 auf letzteren.

Die Randbereiche der Fußplatte 13 weisen spezielle Bahnführungen 17 (Fig. 9) für die Haftfüße 21 auf.

Jede Fußplatte 13 und damit jede Bahnführung 17 für die Haftfüße 21 ist so angeordnet und randseitig ausgeformt, dass die Haftfüße 21 und damit ihre Haftelemente 15 um je eine diagonal angeordnete Ecke 18 des quadratischen Fahrwerks 11 laufen und zurück sich über einen inneren Kreisbogen 19 schließen, wobei die beiden Kreisbögen 19 auf einem gedachten Innenkreis liegen, der vom Quadrat, welches das quadratische Fahrwerks 11 ausbildet, eingeschlossen wird. Der Mittelpunkt des Querträgers 12 fällt mit dem Mittelpunkt des gedachten Innenkreises zusammen. Die Haftfüße 21 laufen also auf den Außenrändern der zur Fahrebene ausgerichteten Fußplatten 13 um deren Ränder um und nicht über Kopf. Die Haftflächen aller Haftelemente 15 weisen dadurch stets zur Haftoberfläche. Hierdurch kann die Höhe des Fahrwerks 11 und damit des Kletterroboters entscheidend verringert werden kann. Außerdem lassen sich so kleine Hindernisse überwinden, an denen ansonsten die Haftelemente 15 beim Schwenken anstoßen würden.

Die Haftelemente 15 sind über ihre Haftfüße 21 in der Weise steuerbar, dass sie einzeln relativ zu den Bahnführungen 17 und damit zur Haftoberfläche, also der Fahrfläche, senkrecht angehoben und abgesenkt werden können, wobei im abgesenkten Zustand die Haftelemente 15 "EIN" geschaltet werden und im angehobenen Zustand "AUS". Je nachdem, welche Haftelemente 15 abgesenkt und "EIN" geschaltet sind, bewegt sich der Kletterroboter, wobei die Steuerung der beiden Motoren die Richtung "VOR", "ZURRÜCK", "RECHTS", "LINKS", "DREHEN IM UHRZEIGERSINN" oder "DREHEN IM GEGENUHRZEIGERSINN" bestimmt.

Soll beispielsweise der Kletterroboter nach rechts in Pfeilrichtung fahren (Fig. 3), also mit seinem Reinigungsgerät 4 voran, so werden diejenigen Haftelemente 15 aktiviert, die gerade auf ihren Endloszugmittelabschnitten längs zur Fahrtrichtung fluchten. Das betrifft in der Fig. 3 insgesamt acht Haftelemente 15 auf zwei äußeren parallelen Endloszugmittelabschnitten, wobei die in Fahrtrichtung vier rechten Haftelemente 15 im Uhrzeigersinn um ihre Fußplatten 13 laufen und die in Fahrtrichtung vier linken Haftelemente 15 im Gegenuhrzeigersinn. Alle anderen Haftelemente 15 sind angehoben und "AUS" geschaltet.

Soll sich der Kletterroboter beispielsweise quer zum Reinigungsgerät 4 in Richtung des strichlinierten Pfeils bewegen und damit parallel zur Putzwalze 7 nach "oben", so werden diejenigen Haftelemente 15 aktiviert, die gerade parallel zur Putzwalze 7 fluchten. Das betrifft in der Fig. 3 wieder insgesamt acht Sauger auf zwei geraden Bereichen der Endloszugmittel 14, wobei jetzt die in Fahrtrichtung gesehen vier rechten Haftelemente 15 im Uhrzeigersinn um ihre Fußplatten 13 laufen und die in Fahrtrichtung gesehen vier linken Haftelemente 15 im Gegenuhrzeigersinn. Alle anderen Haftelemente sind angehoben und "AUS" geschaltet.

Die symmetrische Über-Eck-Anordnung der Tragplatten 13 und damit der Haftfüße 21 ermöglicht es, dass die Längs- und die Querbewegung des Kletterroboters völlig gleichberechtigt erfolgen.

Soll der Kletterroboter sich um einen Winkel drehen, so werden insgesamt 14 Sauger aktiviert, nämlich alle diejenigen, die gerade auf dem gedachten Innenkreis liegen, den die beiden Fußplatten 13 vorgeben, wobei beide Endloszugmittel 14 sich im selben Drehrichtungssinn drehen. Alle anderen Haftelemente 15 haben abgehoben und sind "AUS" geschaltet.

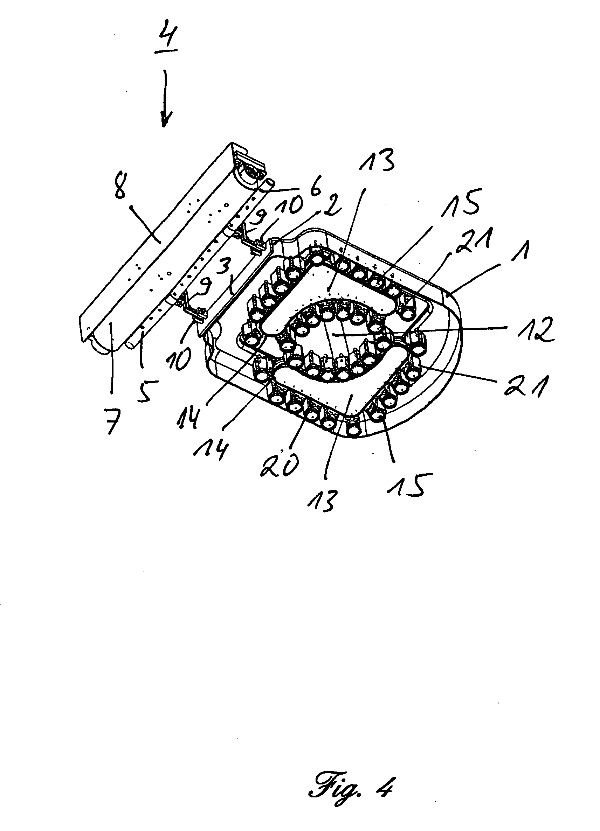

In Fig. 4 ist der Kletterroboter nochmals in perspektivischer Ansicht von unten dargestellt. Aus dieser Perspektive lassen sich die beiden an den Enden des Querträgers 12 kardanisch oder fix aufgehängten Fußplatten 13 mit ihren von Endloszugmitteln 14 gezogenen Haftfüßen 21 gut erkennen, an deren Unterseiten die Haftelemente 15 sitzen. An die Stirnseite 2 der Abdeckhaube 1 ist über den Adapter 3 das Reinigungsgerät 4 montiert.

Fig. 5 zeigt den Kletterroboter schematisch von oben mit abgenommener Abdeckhaube 1. An jedem Ende 16 des länglichen Querträgers 12 ist in den beiden Eckbereichen 18 des Fahrwerks 11 eine Fußplatte 13 mit umlaufenden Haftfüßen 21 befestigt. Zu sehen sind die Endloszugmittel 14 und Halter 20, mit deren Hilfe die Haftfüße 21 um die Ränder der Fußplatten 13 laufen. Das Reinigungsgerät 4 ist an den Adapter 3 angekuppelt. Die Außenränder der Fußplatten 13 liegen auf einem gedachten Quadrat, die Innenränder der Fußplatten 13 liegen auf einem gedachten Kreis, der vom Quadrat eingeschlossen wird und dessen Mittelpunkt mit dem Mittelpunkt der Tragplatte 12 zusammenfällt.

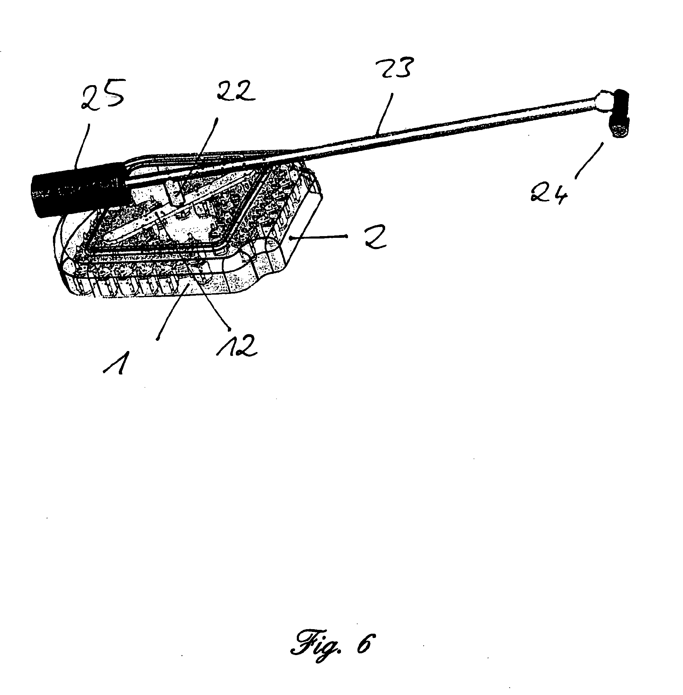

In Fig. 6 ist eine Variante eines Kletterroboters mit einem Inspektionsgerät in perspektivischer Ansicht und durchscheinend dargestellt. Eine Welle 22 ist auf der Tragplatte 12 gelagert und durchdringt zentral die Abdeckhaube 1. Sie kann aber auch auf der Abdeckhaube 1 selbst befestigt sein. Auf der Welle 22 ist ein Gerätearm 23 befestigt, an dessen vorderem Ende eine Kamera 24 drehbeweglich installiert ist und an dessen hinterem Ende ein Ausgleichsgewicht 25 mit einer Schnittstelle für die Kameras 24 sitzt. Die Schnittstelle kann z. B. eine Funkschnittstelle, optische Schnittstelle oder Kabelkupplung sein. Die Welle 22 selbst kann fest oder drehbar befestigt sein. Mit Hilfe der Kamera 24 lässt sich zum Beispiel eine Flugzeugaußenhaut oder eine Silowand auf Anomalien untersuchen. Selbstverständlich können auch andere Inspektionsgeräte auf dem Gerätearm 23 installiert sein, wie ein Camcorder oder eine Wärmebildkamera. Deutlich auszumachen ist das klein bauende und besonders flache Fahrwerk 11 des Kletterroboters.

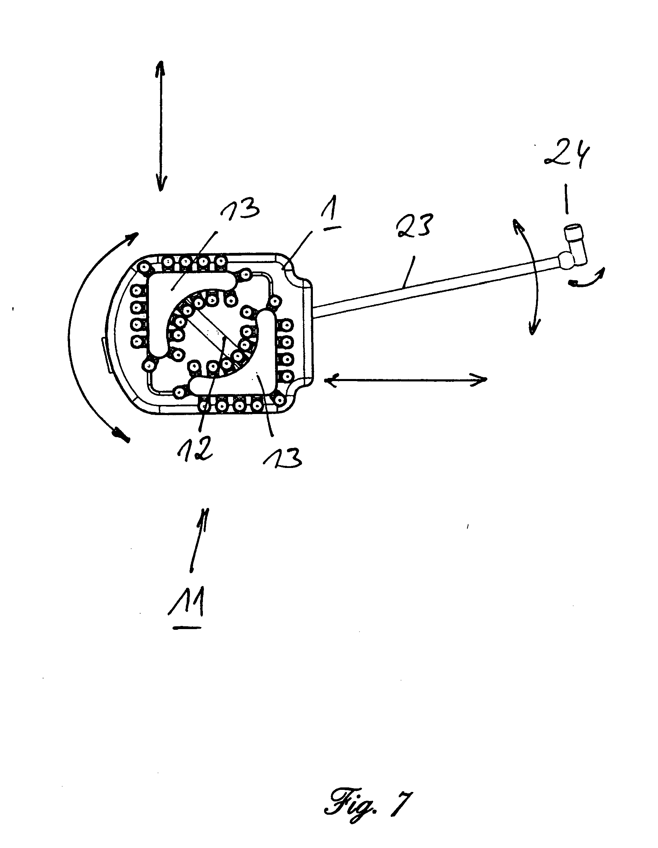

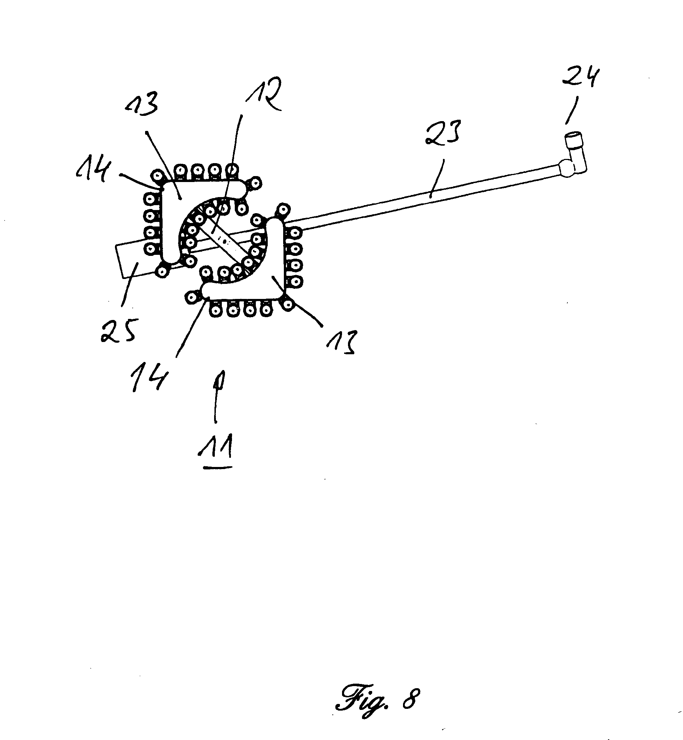

Die Variante nach Fig. 6 ist in Fig. 7 nochmals von unten dargestellt und in Fig. 8 mit abgenommener Abdeckhaube 1 von unten gezeigt. Die in Fig. 7 eingetragenen Pfeile verdeutlichen eine motorisch steuerbare Beweglichkeit des Fahrwerks 11, des Gerätearms 23 und des Inspektionsgerätes 24. Die Motoren zum Antrieb der Endloszugmittel 14 sitzen nicht sichtbar unterhalb der Querträgerenden 16 (Fig. 5) auf den Fußplatten 13. Ein Motor für die Drehbeweglichkeit des Gerätearms 23 sitzt auf dessen Drehachse und die Verstellbarkeit der Kamera 24 übernimmt ein weiterer Motor. An jedem der zwei Endloszugmittel 14 des Kletterroboters sind auf die Länge verteilt 18 Haftfüße 21 befestigt. Insgesamt arbeitet der Kletterroboter im Beispiel also mit 36 Haftfüßen 21.

In Fig. 9 ist ein Haftfuß 21 für Sauger als Haftelemente 15 in angehobener Position des Saugers näher dargestellt. Der Halter 20 hält den Haftfuß 21 derart, dass dieser zwar zugmittelgezogen um seine Fußplatte 13 umlaufen kann, aber nicht abfällt. Von ihm streben eine obere und eine untere Führungslasche 27 mit Führungsrollen 28 ab. Der Außenrand der Fußplatte 13 hat einen oberen vorspringenden Rand und einen unteren vorspringenden Rand. Mit seinen Führungsrollen 28 wird der Haftfuß 21 entlang dieser Ränder geführt. Außerdem sind zwischen den beiden Führungslaschen 27 zwei Haltewinkel 29 am Halter 21 befestigt, zwischen denen das Endloszugmittel 14 durchgeführt ist. Das Endloszugmittel 14 ist beispielsweise eine Gliederkette nach Art einer Fahrradkette. Mit einem Stift, der durch die Haltewinkel 29 und eine Buchse der durchgeführten Gliederkette geht, ist der Haftfuß 21 zugfest mit der Gliederkette verbunden.

Der Halter 20 trägt eine feststehende vertikale Kolbenstange 30 einer Kolben-Zylindereinheit, deren Hubzylinder 31 entlang der Kolbenstange 30 höhenverstellbar ist und an dessen Unterseite der Sauger 15 befestigt ist. Die Kolben-Zylindereinheit 30, 31 und der Sauger 15 werden pneumatisch betätigt, wobei eine Steuereinheit 32 das Management besorgt.

Durch Luftdruck auf den Hubzylinder 31 der Kolben-Zylindereinheit 30,31 lässt sich der Hubzylinder 31 mit seinem Sauger 15 absenken bzw. anheben. Die Kolbenstange 30 steht fest. Im Sauger 15 wird entweder für die Haftfunktion Vakuum erzeugt oder andererseits Druckluft eingeblasen, um den Sauger 15 schneller von der Fahrfläche zu lösen. Auf diese Weise kann jeder Haftfuß 21 einzeln mittels eines übergeordneten Managements gesteuert sich senken und saugen bzw. entlüften und heben. Eine Prismenführung, bestehend aus einem in den Haftfuß 20 integrierten Gleitschlitten 33 und einer vom Halter 20 getragenen Schlittenbahn 34 führt den Haftfuß zusätzlich zur Kolben-Zylindereinheit 30, 31.

Was oben stehend für Sauger 15 als Haftelemente gilt, gilt auch für Schaltmagnete. Anstelle eines Ejektors zur Erzeugung von Vakuum für einen Sauger 15 wird der Schaltmagnet elektromagnetisch erregt. Es versteht sich, dass für magnetische Haftelemente eine ferromagnetische Haftoberfläche Bedingung ist.

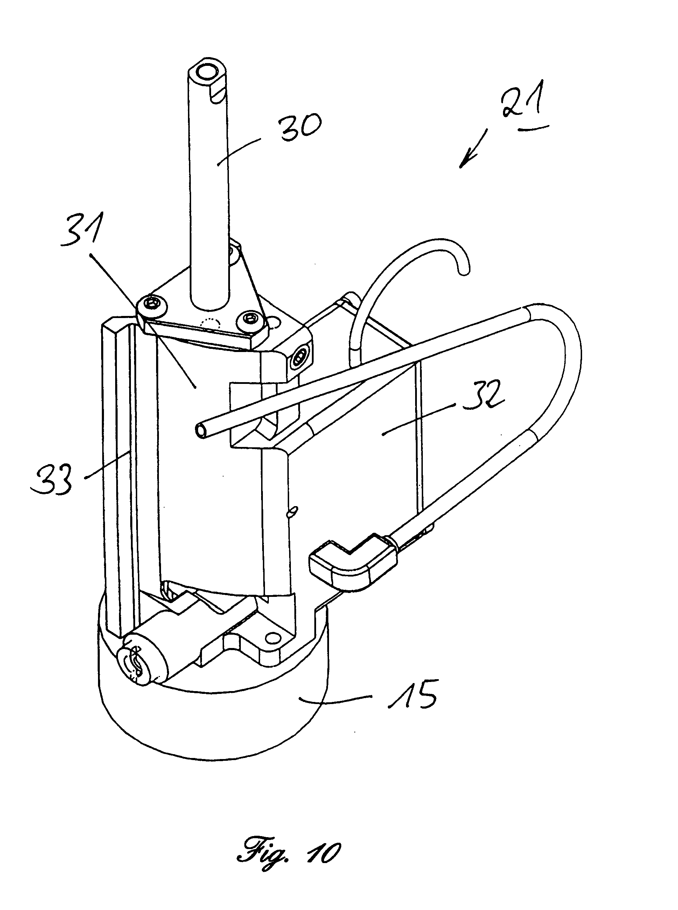

In Fig. 10 ist ein Haftfuß 21 mit einem Schaltmagnet als Haftelement 15 näher ausgeführt. Die Kolbenstange 30 ist wiederum feststehend und der Zylinder 31 beweglich. Der Schaltmagnet wird über die Kolben-Zylindereinheit 30, 31 gehoben und gesenkt. Dargestellt ist die abgesenkte Position des Haftelements 15. Die Halterung ist mit Ausnahme des Gleitschlittens 33 nicht dargestellt. Zur Führung und zum Umlauf des Haftfußes 21 um die Fußplatte 13 kann auf die vorstehenden Ausführungen zu Fig. 9 verwiesen werden.

Anstelle einer pneumatischen Betätigung der Haftelemente kann das Heben und Senken auch elektromagnetisch (Linearzylinder), mit Spindel oder Zahnstange und Ritzel bewirkt werden.

Ein Mikrokontroller steuert in Zusammenarbeit mit Sensoren und pneumatischen Stell- und Regelgliedern die zeitliche Abfolge der Stell- und Haftzustände der Haftfüße 21. Außerdem wird im Fahrbetrieb stets geprüft, ob eine genügend große Haftkraft gegen Absturz des Roboters an kritischen Fahrflächen herrscht. Droht eine programmmäßig festgelegte Haftkraft unterschritten zu werden, beispielsweise weil unzulässig viele Haftelemente 15 keinen Kontakt zur Fahrfläche finden (Kante, ungeeignete Fahrbahnbeschaffenheit, Betriebsstörung), hält das Fahrwerk automatisch an.

### Bezugszeichen

- 1: Abdeckhaube
- 2: Stirnseite der Abdeckhaube
- 3: Adapter
- 4: Reinigungsgerät
- 5: Sprührohr
- 6: Düsen
- 7: Putzrolle
- 8: Spritzschutz
- 9: Verstelleinrichtung
- 10: Gelenkbolzen
- 11: Fahrwerk
- 12: Länglicher Querträger
- 13: Fußplatte
- 14: Endloszugmittel (Kette, Zahnriemen)
- 15: Haftelement (Sauger, Schaltmagnet)
- 16: Trägerende
- 17: Bahnführung um die Fußplatte
- 18: Eckbereich des quadratischen Fahrwerks
- 19: Kreisbogen
- 20: Halter
- 21: Haftfuß
- 22: Welle
- 23: Gerätearm
- 24: Kamera
- 25: Ausgleichsgewicht
- 27: Führungslasche
- 28: Haltewinkel
- 29: Führungsrolle
- 30: Kolbenstange
- 31: Hubzylinder
- 32: Steuereinheit
- 33: Gleitschlitten
- 34: Schlittenbahn

## Patentansprüche

1. Kletterroboter für das Befahren von Haftoberflächen mit Endloszugmitteln (14) und daran beabstandet befestigten, steuerbaren Haftfüßen (21), die mit den Endloszugmitteln (14) entlang von Bahnführungen (17) in der Fahrebene umlaufen, wodurch die Haftseiten ihrer Haftelemente (15) stets zur Fahrbahnfläche weisen und wobei diejenigen Haftelemente (15), die den Kletterroboter stützen und bewegen, "EIN" geschaltet und auf die Haftoberfläche abgesenkt sind und alle anderen Haftelemente (15) "AUS" geschaltet und von der Haftoberefläche abgehoben sind, wobei der Kletterroboter ein quadratisches Fahrwerk (11) aufweist,
**dadurch gekennzeichnet,**
**dass** in zwei sich diagonal gegenüberliegenden Eckbereichen (18) des Fahrwerks (11) jeweils eine Fußplatte (13) mit einer randseitig umlaufenden Bahnführung (17) für eine Vielzahl der zugmittelgetriebenen Haftfüße (21) angeordnet ist, wobei die Fußplatten (13) an einem Träger (12) des Fahrwerks (11) kippbeweglich befestigt sind, und dass die Haftfüße (21) und damit ihre Haftelemente (15) durch die Bahnführung (17) so geführt sind, dass sie jeweils rechtwinklig um ihren Eckbereich (18) des quadratischen Fahrwerks (11) und entlang eines die Enden dieses Eckbereiches (18) verbindenden Kreisbogens (19) laufen, wobei beide Kreisbögen (19) auf einem vom Quadrat des Fahrwerks (11) eingeschlossenen Innenkreis liegen und der Träger (12) als Querträger mit zwei symmetrischen Enden (16) ausgebildet ist, an denen die Fußplatten (13) kippbeweglich so angelenkt sind, dass der Mittelpunkt des Trägers (12) mit dem Mittelpunkt des gedachten Innenkreises zusammenfällt.

2. Kletterroboter nach Anspruch 1,
**dadurch gekennzeichnet,**
**dass** für eine Geradfahrt des Kletterroboters alle auf den fahrtrichtungsgleichen Abschnitten der Führungsbahnen (17) befindliche Haftelemente (15) "EIN" geschaltet und abgesenkt sind und die Endloszugmittel (14) die Haftelemente (15) richtungsgleich (VORWÄRTS oder RÜCKWÄRTS) bewegen, für eine Drehbewegung des Kletterroboters alle auf den Innenkreisabschnitten der Führungsbahnen (17) befindliche Haftelemente (15) "EIN" geschaltet und abgesenkt sind und die Endloszugmittel (14) die Haftelemente (15) richtungsgleich (UHRZEIGERSINN oder GEGENUHRZEIGERSINN) bewegen und für eine Rechts- oder Linksfahrt des Kletterroboters alle auf den 90° versetzten, fahrtrichtungsgleichen Abschnitten der Führungsbahnen (17) befindliche Haftelemente (15) "EIN" geschaltet und abgesenkt sind und die Endloszugmittel (14) die Haftelemente (15) richtungsgleich (RECHTS oder LINKS) bewegen.

3. Kletterroboter nach Anspruch 1 oder 2,
**dadurch gekennzeichnet,**
**dass** die Haftelemente (15) Sauger oder Schaltmagnete sind und jedes Haftelement (15) am Ende eines Hubzylinders (31) einer Kolben-Zylindereinheit (30, 31) eines Haftfußes (21) sitzt, der an einem Halter (20) um die Fußplatte (13) führbar und vom Endloszugmittel (14) antreibbar ist.

4. Kletterroboter nach Anspruch 3,
**dadurch gekennzeichnet,**
**dass** die Kolben-Zylindereinheiten (30, 31) und Haftelemente (15) pneumatisch und/oder elektromagnetisch beaufschlagt und von einer übergeordneten Steuerung gesteuert werden.

5. Kletterroboter nach einem der vorstehenden Ansprüche,
**dadurch gekennzeichnet,**
**dass** der Träger (12) eine Abdeckhaube (1) für den Kletterroboter trägt.

6. Kletterroboter nach Anspruch 5,
**dadurch gekennzeichnet,**
**dass** die Abdeckhaube (1) einen Adapter (3) für ein austauschbares Arbeitsgerät (4) trägt.

7. Kletterroboter nach Anspruch 1 oder 5,
**dadurch gekennzeichnet,**
**dass** der Träger (12) oder die Abdeckhaube (1) eine senkrechte, drehbare oder feste Welle (22) für einen Gerätearm (23) eines optischen Inspektionsgerätes (24) trägt.

8. Kletterroboter nach einem der vorstehenden Ansprüche,
**dadurch gekennzeichnet,**
**dass** der Kletterroboter ein Reinigungsgerät (4) oder ein Inspektionsgerät (24) trägt.

9. Kletterroboter nach Anspruch 8,
**dadurch gekennzeichnet,**
**dass** der Kletterroboter, das Reinigungsgerät (4) und das Inspektionsgerät (24) fernsteuerbar sind.

## Claims

1. A climbing robot for travelling over adhesive surfaces with endless traction mechanisms (14) and, fastened to them at a distance, controllable adhesive feet (21) that circulate with the endless traction mechanisms (14) along guides (17) in the travel plane, by means of which the adhesive sides of their adhesive elements (15) always point towards the travel surface and wherein the adhesive elements (15) that support and move the climbing robot are switched "ON" and lowered onto the adhesive surface and all of the other adhesive elements (15) are switched "OFF" and raised from the adhesive surface, wherein the climbing robot has square running gear (11), **characterized in that** one foot plate (13) each with a guide (17) running around the edges for a multitude of adhesive feet (21) driven by traction mechanisms is arranged in two diagonally opposite corner areas (18) of the running gear (11), wherein the foot plates (13) are attached to a support bar (12) of the running gear (11) so as to be able to tilt, and that the adhesive feet (21) and therefore their adhesive elements (15) are routed through the guide (17) in such a way that they run in each case at a right angle around their corner area (18) of the square running gear (11) and along an arc (19) connecting the ends of this corner area (18), wherein both of the arcs (19) are on an inner circle enclosed by the square of the running gear (11) and the support bar (12) is designed as a crossbar with two symmetrical ends (16) to which the foot plates (13) are linked with the ability to tilt in such a way that the center of the support bar (12) coincides with the center of the imaginary inner circle.

2. Climbing robot according to Claim 1, **characterized in that** all of the adhesive elements (15) located in the sections of the guides (17) with the same direction as the direction of travel are switched "ON" and lowered for straightaway travel of the climbing robot and the endless traction mechanisms (14) move the adhesive elements (15) in the same direction (FORWARDS or BACKWARDS), all of the adhesive elements (15) located in the inner-circle sections of the guides (17) are switched "ON" and lowered for a rotary movement of the climbing robot and the endless traction mechanisms (14) move the adhesive elements (15) in the same direction (CLOCKWISE or COUNTERCLOCKWISE) and all of the adhesive elements (15) located in the sections of the guides (17) at a 90° angle to the direction of travel are switched "ON" and lowered for a travel to the right or to the left and the endless traction mechanisms (14) move the adhesive elements (15) in the same direction (RIGHT or LEFT).

3. Climbing robot according to Claim 1 or Claim 2, **characterized in that** the adhesive elements (15) are suction cups or switching magnets and every adhesive element (15) is at the end of a lifting cylinder (31) of a piston cylinder unit (30, 31) of an adhesive foot (21) that can be routed on a holder (20) around the foot plate (13) and that can be driven by the endless traction mechanism (14).

4. Climbing robot according to Claim 3, **characterized in that** the piston cylinder units (30, 31) and adhesive elements (15) are pneumatically and/or electromagnetically actuated and controlled by a higher-level control unit.

5. Climbing robot according to one of the above claims, **characterized in that** the support bar (12) carries a cover (1) for the climbing robot.

6. Climbing robot according to Claim 5, **characterized in that** the cover (1) supports an adapter (3) for an exchangeable work device (4).

7. Climbing robot according to Claim 1 or Claim 5, **characterized in that** the support bar (12) or the cover (1) supports a vertical, rotating or fixed shaft (22) for a device arm (23) of an optical inspection device (24).

8. Climbing robot according to one of the above claims, **characterized in that** the climbing robot carries a cleaning device (4) or an inspection device (24).

9. Climbing robot according to Claim 8, **characterized in that** the climbing robot, the cleaning device (4) and the inspection device (24) are capable of remote control.

## Revendications

1. Robot escaladeur destiné à pouvoir se déplacer sur des surfaces adhésives à l'aide de moyens de traction sans fin (14) sur lesquelles sont montées de manière écartée des pattes adhésives dirigeables (21) qui ensemble avec les moyens de traction sans fin (14) circulent le long des guidages (17) sur la voie de déplacement ce qui a pour conséquence que les surfaces adhésives des éléments adhésifs respectifs (15) regardent toujours en direction de la surface de la voie de déplacement, pendant que les éléments adhésifs (15) soutenant le robot escaladeur et le mettant en action, sont actionnés (ON) et abaissés jusqu'au niveau de la surface adhésive tandis que tous les autres éléments adhésifs (15) sont désactionnés (OFF) et éloignés de la surface adhésive, le robot escaladeur étant doté d'un châssis carré (11)
**est caractérisé en ce**
**que** dans deux zones angulaires opposées (18) du châssis (11) est montée dans chacune des deux zones une plaque d'assise (13) dotée sur son bord d'un guidage circonférentiel(17) pour les nombreuses pattes adhésives actionnées par les moyens de traction sans fin (21); que les plaques d'assise (13) sont montées de manière amovible sur un support 12) du châssis (11) et que toutes les pattes (21) et ainsi tous les éléments adhésifs (15) pilotés par le guidage (17) se déplacent chacun à angle droit autour leur zone angulaire (18) du châssis carré(11) et le long d'un arc (19) reliant les bouts de cette zone angulaire (18), les deux arcs (19) étant situés sur un cercle intérieur positionné au milieu du carré formé par le châssis(11) et se trouve le support (12) étant en forme de traverse à deux bouts symétriques(16) vers lesquelles les plaques d'assise (13) inclinables sont orientées de sorte,
**que** le centre du support (12) coincide avec le centre du cercle intérieur imaginé.

2. Robot escaladeur suivant la revendication 1,
**est caractérisé en ce**
**que** pour assurer le déplacement droit en avant du robot escaladeur il faut que tous les éléments adhésifs (15) montés sur les tronçons des voies de guidage (17) allant dans le même sens de marche soient actionnés (ON) et abaissés, les moyens de traction sans fin (14) propulsant les éléments adhésifs (15) dans le même sens de marche (EN AVANT ou EN ARRIÈRE); que pour assurer un mouvement rotatif du robot escaladeur il faut que tous les éléments adhésifs (15) montés sur les tronçons du cercle intérieur des voies de guidage (17) soient actionnés (ON) et abaissés, les moyens de traction sans fin (14) propulsant les éléments adhésifs (15) dans le même sens de marche ( SENS HORAIRE ou SENS ANTI-HORAIRE) et que pour déclencher un déplacement du robot escaladeur vers la droite ou vers la gauche il faut que tous les éléments adhésifs montés sur les tronçons des voies de guidage (17) allant dans le même sens de marche et décalés de 90° soient actionnés (ON) et abaissés, les moyens de traction sans fin (14) propulsant les éléments adhésifs (15) dans le même sens de marche (VERS LA DROITE ou VERS LA GAUCHE)

3. Robot escaladeur suivant la revendication 1 ou 2,
**est caractérisé en ce**
**que** les éléments adhésifs (15) sont des ventouses ou des amants de commutation et chacun des éléments adhésifs (15) est monté au bout d'un vérin (31) faisant partie d'un module de vérins à piston (30, 31) d'une patte adhésive (21) qui par l'intermédiaire d'une attache (20) est guidée autour de la plaque d'assise (13), propulsée par un moyen de traction sans fin (14).

4. Robot escaladeur suivant la revendication 3
**est caractérisé en ce**
**que** les modules composés de vérins à piston (30, 31) et les éléments adhésifs (15) sont manipulés par voie pneumatique ou électromagnétique et pilotés par un système de commande supérieur.

5. Robot escaladeur suivant les revendications précédentes
**est caractérisé en ce**
**que** le support (12) porte un capot (1) de protection pour couvrir le robot escaladeur.

6. Robot escaladeur suivant la revendication 5
**est caractérisé en ce**
**que** le capot de protection (1) comprend un adaptateur (3) pour pouvoir utiliser des équipements de travail interchangeables (4).

7. Robot escaladeur suivant les revendications 1 ou 5
**est caractérisé en ce**
**que** le support(12) ou le capot de protection (1) sont dotés d'un axe vertical, rotatif ou solidaire (22), destiné à porter le bras-support (23) d'un instrument d'optique de contrôle (24) .

8. Robot escaladeur suivant une des revendications précédentes
**est caractérisé en ce**
**que** le rabot escaladeur est équipé d'un appareil de nettoyage (4) et/ou d'un instrument de contrôle(24).

9. Robot escaladeur suivant la revendication 8
**est caractérisé en ce**
**que** le robot escaladeur, l'appareil de nettoyage (4) et l'équipement de contrôle(24) peuvent être télécommandés.
